# EUROPEAN PATENT APPLICATION

(11) **EP 3 832 484 A2**
(43) Date of publication of application: **09.06.2021**
(21) Application number: 21164545.2
(22) Date of filing: 24.03.2021
(51) Int. Cl.: G06F 16/33

(54) **SEMANTICS PROCESSING METHOD, SEMANTICS PROCESSING APPARATUS, ELECTRONIC DEVICE, AND MEDIUM**

(30) Priority: 30.04.2020 CN 202010367760
(71) Applicant: BEIJING BAIDU NETCOM SCIENCE AND TECHNOLOGY CO. LTD., 100085 Beijing (CN)
(72) Inventor: TIAN, Meng, Beijing, 100085 (CN); YU, Miao, Beijing, 100085 (CN); JIANG, Wenbin, Beijing, 100085 (CN); FENG, Xinwei, Beijing, 100085 (CN); ZHOU, Huanyu, Beijing, 100085 (CN); YUAN, Pengcheng, Beijing, 100085 (CN); SONG, Xunchao, Beijing, 100085 (CN); WU, Xueqian, Beijing, 100085 (CN); SHI, Hongjian, Beijing, 100085 (CN)
(74) Representative: Studio Torta S.p.A.

(57) **Abstract**

The disclosure discloses a semantics processing method, a semantics processing apparatus, an electronic device, and a medium, and relates to a field of knowledge graph technologies. The detailed implementation includes: determining a target semantic element rule matching a text to be parsed, and parsing the text to be parsed by employing the target semantic element rule to obtain a semantic element parsing result; generating a semantic tree based on the semantic element parsing result by employing a target structured rule associated with the target semantic element rule; and performing semantic understanding on the text to be parsed based on the semantic tree.

## Description

### FIELD

The disclosure relates to a field of data processing and to a field of knowledge graph technologies, and particularly relates to a semantics processing method, a semantics processing apparatus, an electronic device, and a medium.

### BACKGROUND

Natural language processing studies effective communication performed by utilizing natural language between people and computers, and correctly understands semantic information of the natural language, such that people may use the computers with a language which the people is most accustomed to, without spending a lot of time and energy to learn various computer languages which may be not very natural and which the people may be not accustomed to. In this way, human language ability and intelligent mechanism may be further understood through natural language processing technologies.

However, it is very difficult to implement an accurate understanding of a semantics of the natural language. During understanding the semantics of the natural language, there is a problem that parsing the semantics of the natural language has a low accuracy, causing greatly reducing a processing efficiency.

### SUMMARY

According to a first aspect, a semantics processing method is provided. The method includes: determining a target semantic element rule matching a text to be parsed, and parsing the text to be parsed by employing the target semantic element rule to obtain a semantic element parsing result; generating a semantic tree based on the semantic element parsing result by employing a target structured rule associated with the target semantic element rule; and performing semantic understanding on the text to be parsed based on the semantic tree.

According to a second aspect, a semantics processing apparatus is provided. The apparatus includes: a rule determining module, a semantic tree generating module, a semantic understanding module, and a semantic understanding module. The rule determining module is configured to determine a target semantic element rule matching a text to be parsed, and to parse the text to be parsed by employing the target semantic element rule to obtain a semantic element parsing result. The semantic tree generating module is configured to generate a semantic tree based on the semantic element parsing result by employing a target structured rule associated with the target semantic element rule. The semantic understanding module is configured to perform semantic understanding on the text to be parsed based on the semantic tree.

According to a third aspect, an electronic device is provided. The electronic device includes: at least one processor and a memory. The memory is communicatively coupled to the at least one processor. The memory has instructions executable by the at least one processor stored thereon that, when executed by the at least one processor, cause the at least one processor to implement the semantics processing method according to any one of embodiments of the disclosure.

According to a fourth aspect, a non-transitory computer readable storage medium having computer instructions stored thereon is provided. The computer instructions are configured to cause a computer to execute the semantics processing method according to any one of embodiments of the disclosure.

According to a fifth aspect, a computer program product having computer instructions stored thereon is provided. The computer instructions are configured to cause a computer to execute the semantics processing method according to any one of embodiments of the disclosure.

According to the technical solutions of the disclosure, the accuracy and efficiency of semantic processing may be improved.

It should be understood that, contents described in the Summary are not intended to identify key or important features of embodiments of the disclosure, nor is it intended to limit the scope of the disclosure. Other features of the disclosure may become apparent from the following description.

### BRIEF DESCRIPTION OF THE DRAWINGS

The accompanying drawings are used for better understanding the solutions and do not constitute a limitation of the disclosure.
FIG. 1 is a flow chart illustrating a semantics processing method according to embodiments of the disclosure.
FIG. 2 is a flow chart illustrating another semantics processing method according to embodiments of the disclosure.
FIG. 3 is a schematic diagram illustrating a tree structure of a target structured rule according to embodiments of the disclosure.
FIG. 4 is a schematic diagram illustrating a semantics tree according to embodiments of the disclosure.
FIG. 5 is a schematic diagram illustrating a semantics tree according to another embodiment of the disclosure.
FIG. 6 is a block diagram illustrating a semantics processing apparatus according to embodiments of the disclosure.
FIG. 7 is a block diagram illustrating an electronic device capable of implementing a semantics processing method according to embodiments of the disclosure.

### DETAILED DESCRIPTION

Description will be made below to exemplary embodiments of the disclosure with reference to accompanying drawings, which includes various details of embodiments of the disclosure to facilitate understanding and should be regarded as merely examples. Therefore, it should be recognized by the skilled in the art that various changes and modifications may be made to the embodiments described herein without departing from the scope and spirit of the disclosure. Meanwhile, for clarity and conciseness, descriptions for well-known functions and structures are omitted in the following description.

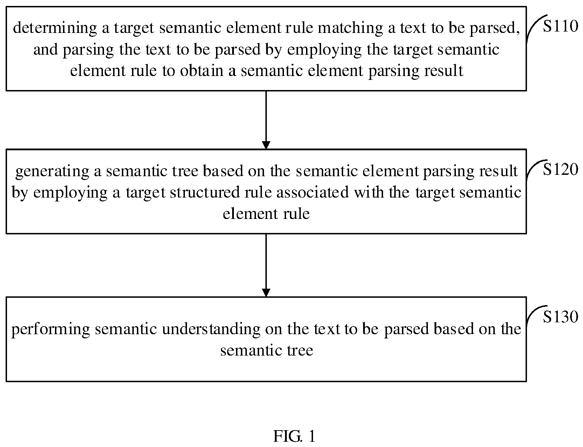

FIG. 1 is a flow chart illustrating a semantics processing method according to embodiments of the disclosure. Embodiments of the disclosure may be applicable for a condition where semantic understanding is performed on a text to be parsed based on a constructed semantic tree. The method may be executable by a semantics processing apparatus. The apparatus may be implemented in a hardware and/or software way, and may be configured in an electronic device. The method includes the following.

At block S 110, a target semantic element rule matching a text to be parsed is determined, and the text to be parsed is parsed by employing the target semantic element rule to obtain a semantic element parsing result.

In embodiments of the disclosure, the text to be parsed may be natural language inputted by a user during online search or industry question and answer, which may be inputted in a form of speech or text. A semantic element rule is an element extraction rule (i.e., a rule of extracting elements) made based on syntax of semantic elements, which may be generated in advance or customized by the user. For example, the semantic element rule may be generated based on a syntax rule of semantic elements and a personalized requirement of the user. There may be multiple semantic element rules, that is, there may be multiple candidate semantic element rules. A candidate semantic element rule matching the text to be parsed is the target semantic element rule.

When there is no target semantic element rule matching the text to be parsed during determining the target semantic element rule matching the text to be parsed, the user may be prompted to input a keyword in the semantic element rule via speech. A semantic element rule is automatically generated by a system based on the keyword inputted by the user, and is stored in a rule database as a new candidate semantic element rule. A candidate semantic element rule with a large degree of matching the text to be parsed may be recommended based on the text to be parsed to the user, this candidate semantic element rule may be adaptively modified by the user to obtain a new candidate semantic element rule, and the new candidate semantic element rule may be stored in the rule database. The new candidate semantic element rule is taken as the target semantic element rule matching the text to be parsed. The semantic element rules in the rule database may be effectively updated by adding and modifying the semantic element rules, thereby improving the practicability of the semantic element rules in the rule database. Of course, when there is no target semantic element rule matching the text to be parsed, the user may also be refused to respond, and the operation ends.

At block S120, a semantic tree is generated based on the semantic element parsing result by employing a target structured rule associated with the target semantic element rule.

Since a conventional parsing method constructs the semantic tree based on parsed semantic elements when parsing the natural language, to realize understanding for the natural language, the conventional parsing method may better deal with simple problems. However, especially for complicated problems, it is difficult for the conventional parsing method to correctly parse the complicated problems by the semantic tree constructed simply based on the parsed semantic elements, thereby causing a low parsing efficiency.

In embodiments of the disclosure, a question in the text to be parsed may be converted into a tree structure based on the target structured rule. Then semantic elements in the semantic element parsing result are filled into the tree structure based on the target structured rule to generate the semantic tree, thereby effectively enhancing the universality of the semantic tree.

In the rule database, an association between semantic element rules and structured rules needs to be established in advance, to ensure that the associated target structured rule may be quickly and accurately found based on the target semantic element rule. The structured rule may be generated in advance, and may also be customized by the user based on the requirement of the user, which may achieve a maximum applicability of the structured rule, thereby effectively improving the accuracy of the semantic tree.

At block S130, semantic understanding is performed on the text to be parsed based on the semantic tree.

In embodiments of the disclosure, the semantic tree may be generated based on the target structured rule and the semantic elements, and may accurately and effectively understand the complicated problem existing in the text to be parsed, thereby solving problems of a low parsing efficiency and low accuracy caused by parsing the complicated problem based on the semantic elements only. In this way, it may be implemented that an answer query statement may be generated based on the semantic tree in the question and answer of different scenes, and configured to quickly search for the question in the text to be parsed.

With the technical solutions of the embodiments, the target semantic element rule matching the text to be parsed is determined. The text to be parsed is parsed by employing the target semantic element rule to obtain the semantic element parsing result. The semantic tree is generated based on the semantic element parsing result by employing the target structured rule associated with the target semantic element rule. The semantic understanding is performed on the text to be parsed based on the semantic tree. With the embodiments, the semantic tree is generated based on the target structured rule and the semantic elements, thereby effectively improving the parsing efficiency and the parsing accuracy of the complicated problem in the text to be parsed.

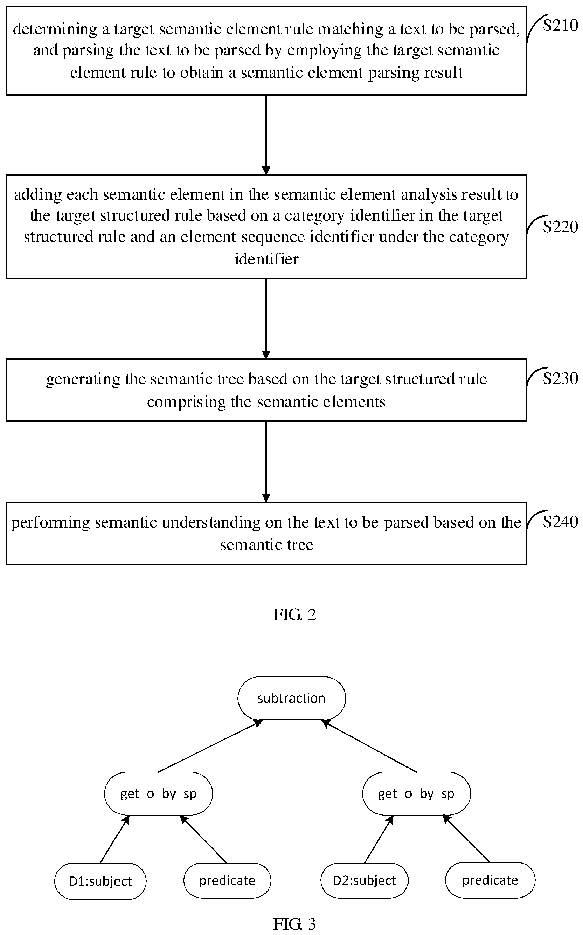

Embodiments of the disclosure also provide a preferable implementation of the semantics processing method, which may quickly and simply generate the semantic tree based on the target structured rule of the semantic elements. FIG. 2 is a flow chart illustrating another semantics processing method according to embodiments of the disclosure. The method includes the following.

At block S210, a target semantic element rule matching a text to be parsed is determined, and the text to be parsed is parsed by employing the target semantic element rule to obtain a semantic element parsing result.

In embodiments of the disclosure, the target semantic element rule matching the text to be parsed needs to be determined from all candidate semantic element rules stored in the rule database. In order to ensure the accuracy of the determined target semantic element rule matching the text to be parsed, the target semantic element rule may be effectively determined through a preset user-defined rule.

In some embodiments, the target semantic element rule matching the text to be parsed is selected from the candidate semantic element rules based on a slot dictionary, and the text to be parsed is parsed by employing the target semantic element rule to obtain the semantic element parsing result.

In embodiments of the disclosure, the slot dictionary may provide candidate words of candidate parts of speech, which may be customized and added by the user based on the requirement of the user. A slot type may also be added based on the requirement of the user, and contents in each slot may also be dynamically added. For example, for "Zhang San's wife", a part of speech of "Zhang San" is determined as the subject by utilizing the slot dictionary. The part of speech of the first word which is the subject is taken as a candidate semantic element rule, and the other words are filtered out, and so on and so forth, to obtain the target semantic element rule matched successfully. The accuracy of selecting the target semantic element rule matching the text to be parsed may be effectively improved based on the preset slot dictionary, thereby improving a validity of semantic elements parsed from a more complicated text to be parsed.

In some embodiments, the semantic element parsing result includes at least one category of semantic elements in the text to be parsed and a sequence of semantic elements in the category. The semantic elements parsed form the more complicated text may have multiple categories. By ordering the semantic elements in each category, a semantic structure of the text to be parsed may be effectively determined, thereby reducing the complexity of the parsed text in the parsing process.

At block S220, each semantic element in the semantic element analysis result is added to the target structured rule based on a category identifier in the target structured rule and an element sequence identifier under the category identifier.

In embodiments of the disclosure, the category identifier in the target structured rule may be "subject", "predicate" and "comp_words", where the "subject" is the subject of the text to be parsed, the "predicate" is the predicate of the text to be parsed, and the "comp_words" is a comparative word in the text to be parsed. In detail, the category identifier in the target structured rule is not limited to the above three categories, and supports user extension. The element sequence identifier under the category identifier is configured to accurately reflect the sequence of the semantic elements appearing in the text to be parsed.

At block S230, the semantic tree is generated based on the target structured rule including the semantic elements.

In embodiments of the disclosure, the sequence of the semantic elements in the target structured rule is consistent with a sequence of the semantic elements appearing in the text to be parsed. The semantic tree is constructed for the text to be parsed based on the category identifier in the target structured rule and the element sequence identifier under the category identifier, which may effectively improve the construction efficiency and applicability of the semantic tree.

At block S240, semantic understanding is performed on the text to be parsed based on the semantic tree.

In some embodiments, the action at block S240 includes: performing semantic understanding on the text to be parsed based on semantic rule functions and the semantic elements in the semantic tree.

In embodiments of the disclosure, the semantic rule function may be obtained by user definition, which may meet requirements of different scenes. For example, for a problem in a comparison category, the higher a numerical value, the higher the sequence is. However, in some scenes, the higher the numerical value, the lower the sequence is. For example, the higher the page view (PV) sequence value, the lower the sequence is. By performing the semantic understanding on the text to be parsed based on the preset semantic rule function and the semantic function, semantic content in the text to be parsed may be quickly and accurately recognized, such that a search result or an answer statement may be generated based on a recognition result and fed back to the user.

In some embodiments, a non-leaf node in the semantic tree is a preset semantic rule function, a leaf node in the semantic tree is a parameter of the semantic rule function, and a child node of the non-leaf node is other non-leaf node or leaf node.

In embodiments of the disclosure, the semantic rule function represented by the non-leaf node may be customized, and the semantic rule function has a nesting function. Therefore, fast and accurate parsing on any complicated text to be parsed may be implemented by the semantic tree in the embodiments.

In some embodiments, the method also includes: generating at least one of: the semantic element rule, the target structured rule, and the semantic rule function, defined by a user based on user interaction information.

In embodiments of the disclosure, the user may customize the semantic element rule, the structured rule or the semantic rule function based on different requirements. For example, the semantic element rule, the structured rule or the semantic rule function may be customized via a visual interface. The information in the semantic element parsing rule may be quickly modified, and has strong interpretability and intervention.

Description will be made for the process of constructing the semantic tree and determining the semantic element parsing result in embodiments of the disclosure with reference to the following examples.

### Example one

The slot dictionary associated with the text to be parsed is obtained firstly while the semantic understanding is performed on the text to be parsed " 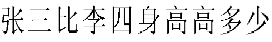 ? (Chinese characters, which mean that how much is ZhangSan taller than LiSi)".

The associated slot dictionary may include candidate words belonging to the part of speech, such as the subject, the predicate and the comp_words. In detail, candidate words belonging to the subject include { 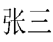 , 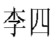 , 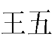 , 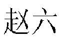 (Chinese characters, which mean names of people, ZhangSan, LiSi, WangWu, ZhaoLiu)}, candidate words belonging to the predicate include { 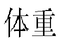 , 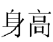 , 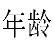 ((Chinese characters, which mean weight, height, and age respectively)}, and candidate words belonging to the comp_words include { 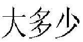 , 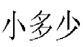 , 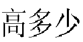 , 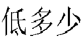 , 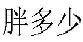 , 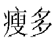 , 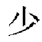 (Chinese characters, which mean "how much...bigger than, how much... smaller than, how much... higher than, how much...lower than, how much... fatter than, and how much... thinner than" respectively)}.

The target semantic element rule matching the text to be parsed is determined as "[subject] 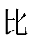 [subject] [predict] [comp _ words]" based on the associated slot dictionary. The Chinese character " 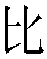 " means comprising or the like.

The target semantic element rule is employed to parse the text to be parsed, to obtain that the words belonging to the subject in the text to be parsed are [ 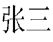 , 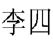 ] (Chinese characters, which mean names of people, ZhangSan, Lisi), the word belonging to the predicate is [ 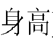 ] (Chinese characters, which mean height), and the words belonging to the comp_words are [ 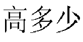 ] (Chinese characters, which mean how much... higher than), that is, the semantic element parsing result is obtained.

The target structured rule associated with the target semantic element rule is obtained, which is: sub traction(get_o_by_sp(D1:subject,predicate),get_o_by_sp(D2:subject,predicate)), where D1:subject represents a first word belonging to the subject in the semantic element parsing result, D2:subject represents a second word belonging to the subject in the semantic element parsing result, and the predicate represents a word belonging to the predicate in the semantic element parsing result.

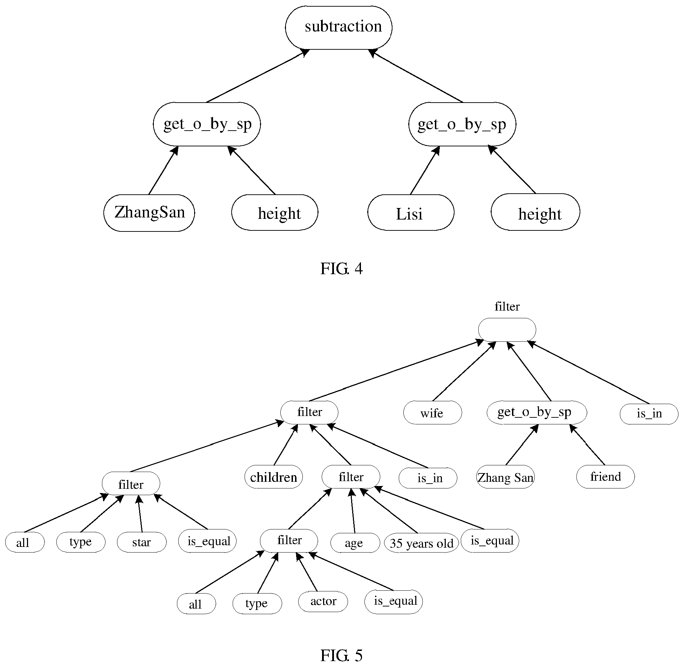

FIG. 3 is a schematic diagram illustrating a tree structure of a target structured rule. FIG. 4 illustrates a semantics tree. In combination with FIG. 3 and FIG. 4, the words in the semantic element parsing result are added to the target structure rule. That is, D1:subject in the tree structure illustrated FIG. 3 is replaced with " 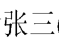 (Chinese characters, which mean names of people, ZhangSan)", D2:subject in the tree illustrated FIG. 3 is replaced with " 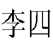 (Chinese characters, which mean names of people, Lisi)", and the predicate is replaced with " 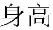 " in the tree structure illustrated in FIG. 3, thereby obtaining the semantic tree of the text to be parsed.

The target semantic element rule is also associated with two semantic rule functions which are subtraction (x1, x2) and get_o_by_sp(subject, predicate).

The subtraction (x1, x2) is configured to calculate a difference between x1 and x2.

The get_o_by_sp(subject, predicate) is configured to obtain an object based on the subject and the predicate.

Referring to FIG. 4, the semantic understanding is performed on the text to be parsed based on the semantic tree and the semantic rule function of the text to be parsed.

### Example two

The slot dictionary associated with the text to be parsed is obtained firstly when the semantic understanding is performed on the text to be parsed " 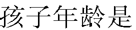 35 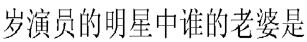 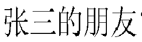 ? (Chinese characters, which mean that Whose wife is a friend of ZhangSan among super stars whose child is 35 years old and is an actor?)".

The associated slot dictionary may include candidate words belonging to the predicate, the object and the category. In detail, candidate words belonging to the predicate includes: { 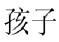 , 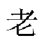 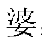 , 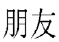 , 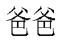 , 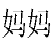 , 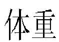 , 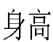 , 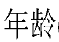 (Chinese characters, which mean "children, wife, friend, father, mother, weight, height, and age" respectively)}, the candidate words belonging to the object includes: {35 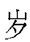 , 180cm, 70kg, 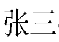 (Chinese characters, which mean "35 years old, 180cm, 70kg, ZhangSan" respectively)}, and the candidate words belonging to the category includes: { 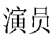 , 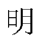 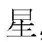 , 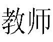 , 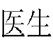 (Chinese characters, which mean "actor, star, teacher, and doctor" respectively)}.

Based on the associated slot dictionary, the target semantic element rule matching the text to be parsed is determined as "[predicate] [predicate] 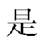 [object] [category] 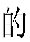 [category] 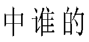 [predicate] 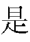 [object] 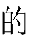 [predicate]". The Chinese character " 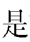 " means yes or be; the Chinese character " 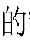 " means of or belongs to; the Chinese character " 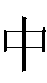 " means among; the Chinese characters " 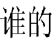 " mean whose.

The text to be parsed is parsed by employing the target semantic element rule, to obtain the following. The words belonging to the predicate in the text to be parsed include: [ 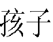 , 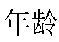 , 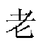 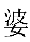 , 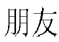 (Chinese characters, which mean "children, age, wife, and friend" respectively)], the words belonging to the object include [35 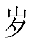 , 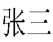 (Chinese characters, which mean "35 years old, and ZhangSan")], and the words belonging to the category include [ 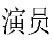 , 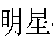 (Chinese characters, which mean "actor and super star")], that is, the semantic element parsing result is obtained.

The target structured rule associated with the target semantic element rule is obtained, that is, filter(filter(filter(all, type, D2:category, is_equal), D1:predicate, filter(filter(all, type, D1: category, is_equal), D2: predicate, D1: object, is_equal), is_in), D3: predicate, get_o_by_sp (D2: object, D4: predicate), is_in). The "is_equal(x1, x2)" is configured to determine whether x1 is equal to x2, and a return value is yes or no. The "is_in(x1, cand_list)" is configured to determine whether x1 exist in cand_list, and a return value is yes or no. The "all" represents to all sets. The "type" represents to all categories. The "D1:predicate, D2:predicate, D3:predicate and D4:predicate" respectively represent the first, second, third and fourth words belonging to the predicate in the parsing result. The "D1:category and D2:category" represent the first word and the second word respectively belonging to the category. The "D1:object and D2:object" represent the first word and the second word respectively belonging to the object.

Referring to FIG. 5, the words in the semantic element parsing result are added to the target structured rule. That is, D2:category is replaced with " 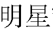 ", D1:predicate is replaced with " 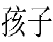 ", D1:category is replaced with " 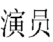 ", D2:predicate is replaced with " 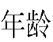 ", D1:object is replaced with "35 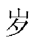 ", D3:predicate is replaced with " 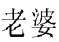 ", D2:object is replaced with" 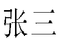 ", D4:predicate is replaced with " 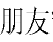 ", thereby obtaining the semantic tree of the text to be parsed.

The target semantic element rule is also associated with a semantic rule function which is filter (cand _ list, property, value, func).

The filter (cand _ list, property, value, func) is configured to filter out a subset meeting the requirement based on an attribute. The "cand_list" represents sets to be filtered. The "property" represents a filter attribute. The "value" represents a filter attribute value. The "func" represents taking any of the "property" and the "value" as a parameter, and a return value is yes or no.

Referring to FIG. 5, the semantic understanding is performed the text to be parsed based on the semantic tree and the semantic rule function of the text to be parsed.

With the embodiments, the semantic tree is constructed for the text to be parsed based on the category identifier in the target structured rule and the element sequence identifier under the category identifier, which may effectively improve the construction efficiency and applicability of the semantic tree.

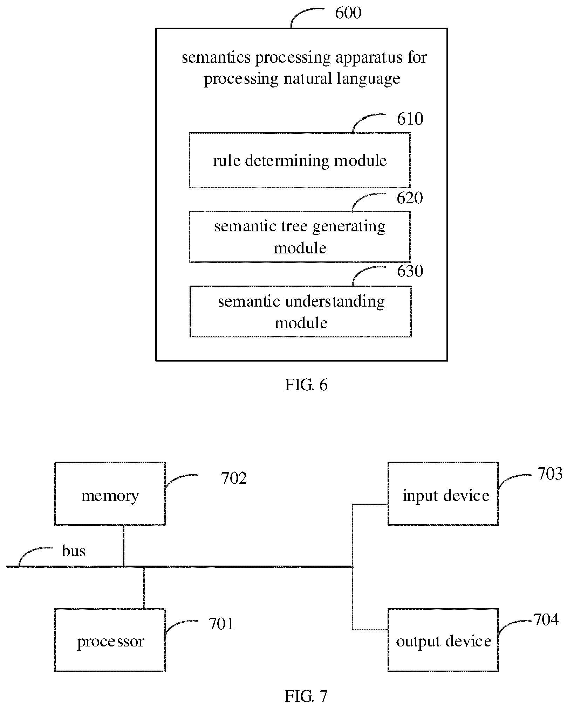

FIG. 6 is a block diagram illustrating a semantics processing apparatus according to embodiments of the disclosure. Embodiments of the disclosure may be applicable to a condition where semantic understanding is performed on a text to be parsed based on a constructed semantic tree. The apparatus may be configured in an electronic device, and may be configured to implement the semantics processing method according to embodiments of the disclosure. The semantics processing apparatus 600 include: a rule determining module 610, a semantic tree generating module 620, and a semantic understanding module 630.

The rule determining module 610 is configured to determine a target semantic element rule matching a text to be parsed, and to parse the text to be parsed by employing the target semantic element rule to obtain a semantic element parsing result.

The semantic tree generating module 620 is configured to generate a semantic tree based on the semantic element parsing result by employing a target structured rule associated with the target semantic element rule.

The semantic understanding module 630 is configured to perform semantic understanding on the text to be parsed based on the semantic tree.

In some embodiments, the semantic element parsing result includes at least one category of semantic elements in the text to be parsed and a sequence of semantic elements in the category.

In some embodiments, the semantic tree generating module 620 is configured to: add each semantic element in the semantic element analysis result to the target structured rule based on a category identifier in the target structured rule and an element sequence identifier under the category identifier; and generate the semantic tree based on the target structured rule comprising the semantic elements.

In some embodiments, a non-leaf node in the semantic tree is a preset semantic rule function, a leaf node is a parameter of the semantic rule function, and a child node of the non-leaf node is other non-leaf node or leaf node.

In some embodiments, the rule determining module 610 is configured to: select the target semantic element rule matching the text to be parsed from candidate semantic element rules based on a slot dictionary, and parse the text to be parsed by employing the target semantic element rule to obtain the semantic element parsing result.

In some embodiments, the semantic understanding module 630 is configured to: perform semantic understanding on the text to be parsed based on the semantic rule function and the semantic elements in the semantic tree.

In some embodiments, the apparatus also includes: a user-defined generating module. The user-defined generating module is configured to generate at least one of: the semantic element rule, the target structured rule, and the semantic rule function defined by a user based on user interaction information.

According to the technical solutions of the embodiments, the semantic tree is generated based on the target structured rule and the semantic elements, thereby effectively improving the parsing efficiency and the parsing accuracy of the complicated problem in the text to be parsed.

According to embodiments of the disclosure, the disclosure also provides an electronic device and a readable storage medium.

As illustrated in FIG. 7, FIG. 7 is a block diagram illustrating an electronic device capable of implementing a semantics processing method according to embodiments of the disclosure. The electronic device aims to represent various forms of digital computers, such as a laptop computer, a desktop computer, a workstation, a personal digital assistant, a server, a blade server, a mainframe computer and other suitable computer. The electronic device may also represent various forms of mobile devices, such as personal digital processing, a cellular phone, a smart phone, a wearable device and other similar computing device. The components, connections and relationships of the components, and functions of the components illustrated herein are merely examples, and are not intended to limit the implementation of the disclosure described and/or claimed herein.

As illustrated in FIG. 7, the electronic device includes: one or more processors 701, a memory 702, and interfaces for connecting various components, including a high-speed interface and a low-speed interface. Various components are connected to each other via different buses, and may be mounted on a common main board or in other ways as required. The processor may process instructions executed within the electronic device, including instructions stored in or on the memory to display graphical information of the GUI (graphical user interface) on an external input/output device (such as a display device coupled to an interface). In other implementations, multiple processors and/or multiple buses may be used together with multiple memories if desired. Similarly, multiple electronic devices may be connected, and each device provides some necessary operations (for example, as a server array, a group of blade servers, or a multiprocessor system). In FIG. 7, a processor 701 is taken as an example.

The memory 702 is a non-transitory computer readable storage medium provided by the disclosure. The memory is configured to store instructions executable by at least one processor, to enable the at least one processor to execute the semantics processing method provided by the disclosure. The non-transitory computer readable storage medium provided by the disclosure is configured to store computer instructions. The computer instructions are configured to enable a computer to execute the semantics processing method provided by the disclosure.

As the non-transitory computer readable storage medium, the memory 702 may be configured to store non-transitory software programs, non-transitory computer executable programs and modules, such as program instructions/module corresponding to the semantics processing method according to embodiments of the disclosure. The processor 701 is configured to execute various functional applications and data processing of the server by operating non-transitory software programs, instructions and modules stored in the memory 702, that is, implements the semantics processing method according to the above method embodiments.

The memory 702 may include a storage program region and a storage data region. The storage program region may store an application required by an operating system and at least one function. The storage data region may store data created according to predicted usage of the electronic device based on the semantic representation. In addition, the memory 702 may include a high-speed random access memory, and may also include a non-transitory memory, such as at least one disk memory device, a flash memory device, or other non-transitory solid-state memory device. In some embodiments, the memory 702 may optionally include memories remotely located to the processor 701, and these remote memories may be connected to the electronic device via a network. Examples of the above network include, but are not limited to, an Internet, an intranet, a local area network, a mobile communication network and combinations thereof.

The electronic device capable of implementing the semantics processing method may also include: an input device 703 and an output device 704. The processor 701, the memory 702, the input device 703, and the output device 704 may be connected via a bus or in other means. In FIG. 7, the bus is taken as an example.

The input device 703 may receive inputted digital or character information, and generate key signal input related to user setting and function control of the electronic device capable of implementing the semantics processing method, such as a touch screen, a keypad, a mouse, a track pad, a touch pad, an indicator stick, one or more mouse buttons, a trackball, a joystick and other input device. The output device 704 may include a display device, an auxiliary lighting device (e.g., LED), a haptic feedback device (e.g., a vibration motor), and the like. The display device may include, but be not limited to, a liquid crystal display (LCD), a light emitting diode (LED) display, and a plasma display. In some embodiments, the display device may be the touch screen.

The various implementations of the system and technologies described herein may be implemented in a digital electronic circuit system, an integrated circuit system, an application specific ASIC (application specific integrated circuit), a computer hardware, a firmware, a software, and/or combinations thereof. These various implementations may include: being implemented in one or more computer programs. The one or more computer programs may be executed and/or interpreted on a programmable system including at least one programmable processor. The programmable processor may be a special purpose or general purpose programmable processor, may receive data and instructions from a storage system, at least one input device, and at least one output device, and may transmit data and the instructions to the storage system, the at least one input device, and the at least one output device.

These computing programs (also called programs, software, software applications, or codes) include machine instructions of programmable processors, and may be implemented by utilizing high-level procedures and/or object-oriented programming languages, and/or assembly/machine languages. As used herein, the terms "machine readable medium" and "computer readable medium" refer to any computer program product, device, and/or apparatus (such as, a magnetic disk, an optical disk, a memory, a programmable logic device (PLD)) for providing machine instructions and/or data to a programmable processor, including a machine readable medium that receives machine instructions as a machine readable signal. The term "machine readable signal" refers to any signal for providing the machine instructions and/or data to the programmable processor.

To provide interaction with a user, the system and technologies described herein may be implemented on a computer. The computer has a display device (such as, a CRT (cathode ray tube) or a LCD (liquid crystal display) monitor) for displaying information to the user, a keyboard and a pointing device (such as, a mouse or a trackball), through which the user may provide the input to the computer. Other types of devices may also be configured to provide interaction with the user. For example, the feedback provided to the user may be any form of sensory feedback (such as, visual feedback, auditory feedback, or tactile feedback), and the input from the user may be received in any form (including acoustic input, voice input or tactile input).

The system and technologies described herein may be implemented in a computing system including a background component (such as, a data server), a computing system including a middleware component (such as, an application server), or a computing system including a front-end component (such as, a user computer having a graphical user interface or a web browser through which the user may interact with embodiments of the system and technologies described herein), or a computing system including any combination of such background component, the middleware components and the front-end component. Components of the system may be connected to each other via digital data communication in any form or medium (such as, a communication network). Examples of the communication network include a local area network (LAN), a wide area networks (WAN), and the Internet.

The computer system may include a client and a server. The client and the server are generally remote from each other and generally interact via the communication network. A relationship between the client and the server is generated by computer programs operated on a corresponding computer and having a client-server relationship with each other.

With the technical solutions according to embodiments of the disclosure, the semantic tree is constructed for the text to be parsed based on the category identifier in the target structured rule and the element sequence identifier under the category identifier, which may effectively improve the parsing efficiency and the parsing accuracy of the complicated problem in the text to be parsed.

It should be understood that, steps may be reordered, added or deleted by utilizing flows in the various forms illustrated above. For example, the steps described in the disclosure may be executed in parallel, sequentially or in different sequences, so long as desired results of the technical solutions disclosed in the disclosure may be achieved, there is no limitation here.

The above detailed implementations do not limit the protection scope of the disclosure. It should be understood by the skilled in the art that various modifications, combinations, sub-combinations and substitutions may be made based on design requirements and other factors. Any modification, equivalent substitution and improvement made within the spirit and the principle of the disclosure shall be included in the protection scope of disclosure.

## Claims

1. A semantics processing method, comprising:
determining (S110; S210) a target semantic element rule matching a text to be parsed;
parsing (S110; S210) the text to be parsed by employing the target semantic element rule to obtain a semantic element parsing result;
generating (S120) a semantic tree based on the semantic element parsing result by employing a target structured rule associated with the target semantic element rule; and
performing (S130; S240) semantic understanding on the text to be parsed based on the semantic tree.

2. The method of claim 1, wherein the semantic element parsing result comprises at least one category of semantic elements in the text to be parsed and a sequence of semantic elements in the category.

3. The method of claim 2, wherein generating (S120) the semantic tree based on the semantic element parsing result by employing the target structured rule associated with the target semantic element rule comprises:
adding (S220) each semantic element in the semantic element analysis result to the target structured rule based on a category identifier in the target structured rule and an element sequence identifier under the category identifier; and
generating (S230) the semantic tree based on the target structured rule comprising the semantic elements.

4. The method of any of claims 1-3, wherein a non-leaf node in the semantic tree is a preset semantic rule function, a leaf node in the semantic tree is a parameter of the semantic rule function, and a child node of the non-leaf node is other non-leaf node or leaf node.

5. The method of any of claims 1-3, wherein determining the target semantic element rule matching the text to be parsed, and parsing the text to be parsed by employing the target semantic element rule to obtain the semantic element parsing result comprises:
selecting the target semantic element rule matching the text to be parsed from candidate semantic element rules based on a slot dictionary, and parsing the text to be parsed by employing the target semantic element rule to obtain the semantic element parsing result.

6. The method of claim 4, wherein performing semantic understanding on the text to be parsed based on the semantic tree comprises:
performing semantic understanding on the text to be parsed based on semantic rule functions and the semantic elements in the semantic tree.

7. The method of claim 6, further comprising:
generating at least one of: the semantic element rule, the target structured rule, and the semantic rule function defined by a user based on user interaction information.

8. A semantics processing apparatus, comprising:
a rule determining module (610), configured to determine a target semantic element rule matching a text to be parsed, and to parse the text to be parsed by employing the target semantic element rule to obtain a semantic element parsing result;
a semantic tree generating module (620), configured to generate a semantic tree based on the semantic element parsing result by employing a target structured rule associated with the target semantic element rule; and
a semantic understanding module (630), configured to perform semantic understanding on the text to be parsed based on the semantic tree.

9. The apparatus of claim 8, wherein the semantic element parsing result comprises at least one category of semantic elements in the text to be parsed and a sequence of semantic elements in the category.

10. The apparatus of claim 9, wherein the semantic tree generating module (620) is configured to:
add each semantic element in the semantic element analysis result to the target structured rule based on a category identifier in the target structured rule and an element sequence identifier under the category identifier; and
generate the semantic tree based on the target structured rule comprising the semantic elements.

11. The apparatus of any of claims 8-10, wherein a non-leaf node in the semantic tree is a preset semantic rule function, a leaf node is a parameter of the semantic rule function, and a child node of the non-leaf node is other non-leaf node or leaf node.

12. The apparatus of any of claims 8-10, wherein the rule determining module (610) is configured to:
select the target semantic element rule matching the text to be parsed from candidate semantic element rules based on a slot dictionary, and parse the text to be parsed by employing the target semantic element rule to obtain the semantic element parsing result.

13. An electronic device, comprising:
at least one processor; and
a memory, communicatively coupled to the at least one processor,
wherein the memory is configured to store instructions executable by the at least one processor, and the at least one processor is caused to execute the semantics processing method according to any one of claims 1 to 7 when the instructions are executed by the at least one processor.

14. A computer readable storage medium having computer instructions stored thereon, wherein the computer instructions are configured to cause a computer to execute the semantics processing method according to any one of claims 1 to 7.

15. A computer program product having computer instructions stored thereon, wherein the computer instructions are configured to cause a computer to execute the semantics processing method according to any one of claims 1 to 7.
